(19) 

Europäisches
Patentamt

European
Patent Office

Office européen
des brevets

(11) **EP 3 830 212 B1**

(12) **EUROPEAN PATENT SPECIFICATION**

(45) Date of publication and mention
of the grant of the patent:
**03.07.2024 Bulletin 2024/27**

(21) Application number: **19839995.8**

(22) Date of filing: **25.07.2019**

(51) International Patent Classification (IPC):
**C09K 5/14** *(2006.01)*    **F28D 20/00** *(2006.01)*
**F28F 21/02** *(2006.01)*

(52) Cooperative Patent Classification (CPC):
**C09K 5/14; F28D 20/0056; F28F 21/02;**
Y02E 60/14

(86) International application number:
**PCT/CA2019/000110**

(87) International publication number:
**WO 2020/019055 (30.01.2020 Gazette 2020/05)**

(54) **MODIFIED INERT GAS ATMOSPHERE AND GRAPHITE BASED THERMAL ENERGY STORAGE**

MODIFIZIERTE INERTGASATMOSPHÄRE UND GRAPHIT-BASIERTE THERMISCHE
ENERGIESPEICHERUNG

ATMOSPHÈRE DE GAZ INERTE MODIFIÉE ET STOCKAGE D'ÉNERGIE THERMIQUE À BASE DE
GRAPHITE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **27.07.2018 CA 3012611**

(43) Date of publication of application:
**09.06.2021 Bulletin 2021/23**

(73) Proprietor: **Kelvin Thermal Energy, Inc.
Toronto, ON M5C 1C3 (CA)**

(72) Inventors:
• **DANAEI, Abdolkarim
Toronto, ON M5H 3B3 (CA)**

• **BARATI, Mansoor
Toronto, ON M5S 3E3 (CA)**
• **AHADI, Amirhossein
Toronto, ON M5A 2M5 (CA)**

(74) Representative: **Murgitroyd & Company
165-169 Scotland Street
Glasgow G5 8PL (GB)**

(56) References cited:
WO-A1-2005/088218    WO-A1-2015/085357
CN-A- 106 052 451    US-B1- 6 272 856

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

Processed by Luminess, 75001 PARIS (FR)

**Description**

FIELD OF THE INVENTION

The present invention relates to thermal energy storage and transfer arrangements and, in particular, relates to an inert gas atmosphere used as an energy transfer medium associated with graphite based systems.

BACKGROUND

A preferred graphite based thermal energy storage system is shown in our earlier filed International PCT application, STABILIZED THERMAL ENERGY OUTPUT SYSTEM, filed on June 22, 2017 and accorded serial number PCT/CA2017/000161.

WO2005/088218 describes a method of and an apparatus for storing heat energy in a body of graphite at an elevated temperature. The method disclosed comprises heating an inner region of a body of graphite when it is required to store the heat energy and recovering the heat by way of a heat exchanger, when the energy is required to be used. The apparatus is described as being suitable for the storage of renewable energy and electric energy obtainable from off peak periods of supply.

Graphite based thermal energy storage systems typically include high temperature electrical heating elements that are located within a graphite storage body for transferring thermal energy from the heating elements to the graphite storage body. Such energy storage systems have a dry inert gas atmosphere that is selectively circulated through the graphite storage body to transfer heat energy from the graphite material to the inert gas atmosphere. The high temperature atmosphere then transfers the thermal energy to downstream equipment using high temperature heat exchangers. The graphite storage body is preferably heated to a high temperature using electrical heating elements located in the graphite storage body. CFC (carbon fiber composite) heating elements can raise the temperature of the graphite body to very high temperatures, however, other components have lower practical temperature limits. For many applications, a maximum temperature of the graphite storage system in the order of about 2000°C provides many advantages.

To accommodate operating temperatures of the storage system in excess of about 1600°C, the electrical heating elements are preferably graphite based heating elements and, in particular, CFC graphite type electrical heating elements with an inert gas atmosphere such as a nitrogen based atmosphere. It is difficult to achieve an atmosphere that is entirely nitrogen and small amounts of oxygen may remain or be present. The term inert is used to indicate an atmosphere that does not detrimentally react with graphite or does not react with the graphite based heating elements to significantly shorten the expected life thereof. Some limited reaction is likely to occur.

Maintaining the circulating gas atmosphere at pressures in excess of atmospheric pressure creates a positive pressure differential causing gas to escape if there is a small leak. From time to time, it is likely that some oxygen may be present (due to partial pressures and diffusion of gases) and/or be inadvertently introduced to the inert gas atmosphere. Graphite in the presence of oxygen begins to oxidize at temperatures above about 350°C. At these temperatures, graphite will also react with carbon dioxide and water.

Any oxygen present in the inert atmosphere, can lead to carbon erosion or carbon loss. Excessive carbon loss from the carbon based heating elements would be detrimental. Some carbon lost from the graphite storage body can be tolerated, however, selective loss of graphite or carbon from the graphite heating elements can lead to premature failure of the heating elements. The heating elements are difficult and costly to replace and premature failure significantly impacts the advantages of the thermal storage system.

The present invention seeks to overcome a number of these problems and deficiencies found in existing thermal storage systems. Examples of high temperature graphite based thermal energy storage systems are shown in Canadian patent no. 2,780,437 and United States publication no. 2015/0219404.

A graphite storage body is preferred due to its exceptional stability, high specific heat, thermal conductivity and strength at high temperature making it particularly suitable for ultra-high temperature applications such as the thermal energy storage arrangement described in the present application. Energy can be selectively removed from the storage body as thermal energy by circulating of the inert gas atmosphere and transfer of the energy out of the system.

Graphite based thermal storage systems have been proposed with operating temperatures up to about 2800°C using an argon inert atmosphere or a helium based inert atmosphere. Vacuum applications have also been considered, however, this makes removal of the thermal energy more difficult. The graphite based heating elements typically have large cross-sectional areas to ensure adequate mechanical stability. This structural arrangement necessitates the requirement for low voltage and high amperage for proper operation. Graphite fiber reinforced graphite composites (CFC composites) are often used for the material of the heating elements. Pure argon and/or helium based inert atmospheres are not reactive with the graphite or the preferred heating elements but these atmospheres are relatively expensive.

CFC based electrical heating elements allow for small cross-sections combined with high electrical resistance. Flat sheets of thin CFC can be machined into intricate shapes to provide custom heating elements. The term "graphite", as used herein, applies to both bulk and fiber reinforced composites involving graphite.

For a number of reasons as set forth above, it is desirable that the heating elements are graphite based heating elements embedded in the graphite storage body and electrically isolated from the storage body. Another characteristic of graphite or CFC material is that it does not show any increase in brittleness even after repeated heating and cooling cycles. Fortunately, graphite is rather unique in that it has increasing strength with increasing temperature and, in the present application, is not damaged by thermal cycling.

Even small amounts of oxygen can cause damage to the graphite storage body but, more particularly, can cause erosion of the graphite of the heating elements and shorten the expected life.

From a practical point of view, the graphite based thermal storage energy system must operate in an effective manner for many years as service on the unit and, in particular, the replacement of the graphite based heating elements is quite involved and requires significant downtime.

An inert gas atmosphere of argon or helium may be preferred from the point of view of being inert, however, the cost and maintenance of such an atmosphere, particularly for relatively large volumes, is not a practical alternative.

SUMMARY OF THE INVENTION

A thermal storage system according to the present invention comprises a graphite thermal body contained within a generally inert nitrogen based atmosphere. The nitrogen based atmosphere includes low volumes of hydrocarbon gas at a concentration sufficient to bind any oxygen that may be inadvertently present in the inert nitrogen based atmosphere. In a preferred embodiment, graphite based electrical heating elements are present and these electrical heating elements are prone to graphite depletion that will occur if free oxygen is available. By providing a low concentration of a hydrocarbon gas in the nitrogen based inert atmosphere, the problem with carbon loss with respect to the heating elements or other components of the system is reduced.

According to an aspect of the invention, the electrical heating elements are carbon fiber carbon composite based electrical heating elements.

In a further aspect of the invention, hydrocarbon gas is present in a concentration of less than 1% by volume less than 5000 ppm is preferred.

In yet a further aspect of the invention, the hydrocarbon gas is selected from methane, propane, ethylene, acetylene and/or mixtures thereof.

In yet a further aspect of the invention, the graphite thermal body includes embedded graphite based electrical heating elements.

In yet a further aspect of the invention, the graphite components of the thermal storage system protected by the inert gas atmosphere, can operate at very high temperatures (in theory, up to 3500°C), however, other components of the system will impose a lower practical temperature limit. An operating temperature of about 1500°C provides many advantages. An upper operating temperature of about 2500°C is possible. The disclosed inert gas atmosphere continues to function throughout the temperature range.

BRIEF DESCRIPTION OF THE DRAWINGS

Preferred embodiments of the invention are shown in the drawings, wherein:

Figure 1 is a schematic view of a graphite based thermal energy storage system that includes an inert nitrogen based atmosphere and hydrocarbon gas being present in the inert atmosphere at low concentration levels;

Figure 2 includes a photograph of graphite pieces before exposure to the heated atmosphere; and

Figure 3 shows the graphite pieces after exposure to the protected nitrogen atmosphere initially containing low levels of oxygen.

**DETAILED DESCRIPTION OF PREFERRED EMBODIMENTS**

The Applicant utilizes a nitrogen based atmosphere that includes small amounts of a hydrocarbon gas to reduce potential problems associated with carbon based heating elements. The amount of hydrocarbon gas is less than the flammability limit of the gas.

As previously indicated, it is quite difficult to obtain and/or maintain a nitrogen based inert atmosphere. With respect to the present application and the use of graphite type electrical heating elements, it is important to reduce impurities that include or react to produce free oxygen. Free oxygen may react with and cause erosion of the carbon of the graphite based heaters. If such erosion occurs, the life of the heating elements will be substantially reduced. The inventors have found that small amounts of hydrocarbon gas, such as methane $CH_4$, propane $C_3H_6$, ethylene $C_2H_4$, or mixtures thereof, can be introduced. The low volume hydrocarbon gas reacts quickly with any available oxygen and binds the oxygen to the carbon element. In the preferred embodiment, the nitrogen atmosphere can be monitored or tested during the circulation thereof for oxygen. With such an arrangement, the hydrocarbon gas can be added in small amounts as necessary to bind any free oxygen. In some cases, hydrocarbon gas is included at low concentration levels (for example 5000 ppm) as a preventive measure and do not require active monitoring.

The preferred hydrocarbon gas is ethylene, although, other hydrocarbon gases operate in a similar manner such as methane, propane, isopropanol, acetylene and mixtures thereof. Ethylene, among other characteristics, has a density similar to nitrogen and is less prone to settling. Hydrocarbon gases have a higher tendency to react with oxygen than graphite or the carbon of the CFC heaters and, thus, the oxygen will react with the hydrocarbon gases first and protect the graphite materials from oxidation at the high operating temperatures. The amount of hydrocarbon gas is well below the flammability limit of the gas. The theoretical reaction products of methane, propane and ethylene with oxygen is set out in the following table:

Table 1: Theoretical reaction products of different HC gas with oxygen

| Gas | Chemical formula | Possible reactions |
|---|---|---|
| Methane | $CH_4$ | $C + CO_2 = 2CO$<br>$C + H_2O = CO + H_2$<br>$CO + 1/2O_2 = CO_2$<br>$CO + H_2O = CO_2 + H_2$<br>$CH_4 + ½O_2 = CO + 2H_2$<br>$CH_4 + CO_2 = 2CO + 2H_2$<br>$CH_4 + H_2O = CO + 3H_2$<br>$CH_4 + 2H_2O = CO_2 + 4H_2$ |
| Propane | $C_3H_6$ | $C_3H_8 + 5O_2 = 3CO_2 + 4H_2O + Heat$ |
| Ethylene | $C_2H_4$ | $C_2H_4 + 3O_2 = 2CO_2 + 2H_2O$<br>$C_2H_4 + O = CH_3 + HCO$<br>$C_2H_4 + O = CH_2 + CH_2 + H_2CO$<br>$C_2H_4 + OH = CH_3 + H_2CO$<br>$C_2H_4 + OH = C_2H_3 + H_2$<br>$C_2H_4 + H = C_2H_3 + H_2$<br>$C_2H_3 + M = C_2H_2 + H + M$<br>$C_2H_3 + O_2 = C_2H_2 + H_2O$ |

Table 2: Theoretical reaction products of nitrogen gas with oxygen impurity and $CH_4$

| T(C) | 1 ppm $CH_4$ | | | | 10 ppm $CH_4$ | | | | 100 ppm $CH_4$ | | | |
|---|---|---|---|---|---|---|---|---|---|---|---|---|
| | Wt%-H2(g) | Wt%-CO(g) | Wt%-CO2 (g) | g-C(s) | Wt%-H2(g) | Wt%-CO(g) | Wt%-CO2(g) | g-C(s) | Wt%-H2(g) | Wt%-CO(g) | Wt%-CO2(g) | g-C(s) |
| 200 | 1.94903E-05 | 8.92903E-07 | 8.42293E-05 | 1920.0162 | 0.00013233 | 2.1752E-06 | 0.000499835 | 1920.1638 | 0.000637828 | 5.46496E-06 | 0.003154759 | 1921.3016 |
| 300 | 2.4399E-05 | 4.44633E-05 | 9.4477E-05 | 1920.0099 | 0.00022518 | 0.00014503 | 0.001005204 | 1920.1335 | 0.001795882 | 0.000401687 | 0.007708975 | 1921.532 |
| 400 | 2.51863E-05 | 0.000167492 | 6.01912E-06 | 1920.0006 | 0.00024858 | 0.00126951 | 0.000345785 | 1920.0369 | 0.002345293 | 0.005912037 | 0.007497198 | 1920.941 |
| 500 | 2.52334E-05 | 0.000175614 | 1.21703E-07 | 1919.9999 | 0.0002521 | 0.00173981 | 1.19445E-05 | 1920.0008 | 0.002499707 | 0.016018909 | 0.001012297 | 1920.1183 |
| 600 | 2.52328E-05 | 0.000175789 | 5.67147E-09 | 1919.9999 | 0.00025232 | 0.00175697 | 5.66536E-07 | 1919.9994 | 0.002520294 | 0.017478651 | 5.60514E-05 | 1920.0012 |
| 700 | 2.52143E-05 | 0.000175798 | 5.01457E-10 | 1919.9998 | 0.00025228 | 0.00175786 | 5.01372E-08 | 1919.9991 | 0.002522368 | 0.01756616 | 5.00517E-06 | 1919.9933 |
| 800 | 2.51338E-05 | 0.000175799 | 7.04238E-11 | 1919.9995 | 0.00025203 | 0.00175794 | 7.04179E-09 | 1919.9981 | 0.002521955 | 0.017574708 | 7.03595E-07 | 1919.9894 |
| 900 | 2.48721E-05 | 0.000175799 | 1.39538E-11 | 1919.9985 | 0.0002512 | 0.00175796 | 1.39529E-09 | 1919.9948 | 0.002519416 | 0.017576012 | 1.39431E-07 | 1919.979 |
| 1000 | 2.41873E-15 | 0.000175799 | 3.5958E-12 | 1919.9958 | 0.00024899 | 0.00175796 | 3.59561E-10 | 1919.9862 | 0.002512422 | 0.017576277 | 3.59321E-08 | 1919.9517 |
| 1100 | 2.29672E-05 | 0.000175799 | 1.13756E-12 | 1919.9901 | 0.00024403 | 0.00175796 | 1.13748E-10 | 1919.967 | 0.002496492 | 0.01757632 | 1.13673 E-08 | 1919.8899 |
| 1200 | 1.99737E-05 | 0.000175799 | 4.23592E-13 | 1919.9796 | 0.00023433 | 0.00175796 | 4.23564E-11 | 1919-9297 | 0.00246465 | 0.01757628 | 4.23283E-09 | 1919.7676 |
| 1300 | 1.58492E-05 | 0.000175799 | 1.79932E-13 | 1919.9637 | 0.00021758 | 0.00175795 | 1.7992E-11 | 1919.866 | 0.02407375 | 0.017576176 | 1.79801E-09 | 1919.5502 |

Table 3: Theoretical reaction products of nitrogen gas with oxygen impurity and $C_3H_6$

| T(C) | 1 ppm $C_3H_6$ | | | | 10 ppm $C_3H_6$ | | | | 100 ppm $C_3H_6$ | | | |
|---|---|---|---|---|---|---|---|---|---|---|---|---|
| | Wt%-$H_2$(g) | Wt%-CO(g) | Wt%-$CO_2$(g) | g-C(s) | Wt%-$H_2$(g)2 | Wt%-CO(g)3 | Wt%-$CO_2$(g)4 | g-C(s)5 | Wt%-$H_2$(g)6 | Wt%-CO(g)7 | Wt%-$CO_2$(g)8 | g-C(s)9 |
| 200 | 1.10737E-05 | 9.91177E-07 | 0.000103791 | 1920.019 | 7.50859E-05 | 2.68663E-06 | 0.000762548 | 1920.202 | 0.000373454 | 7.24173E-06 | 0.00553997 | 1922.024 |
| 300 | 1.39548E-05 | 4.51821E-05 | 9.75563E-05 | 1920.013 | 0.000128864 | 0.000152029 | 0.001104509 | 1920.161 | 0.001034469 | 0.000450888 | 0.009714254 | 1921.828 |
| 400 | 1.44038E-05 | 0.000167744 | 6.03731E-06 | 1920.004 | 0.000142205 | 0.001281534 | 0.000352371 | 1920.07 | 0.00134406 | 0.006113494 | 0.008017928 | 1921.237 |
| 500 | 1.443E-05 | 0.000175627 | 1.21721E-07 | 1920.004 | 0.000144176 | 0.001741049 | 1.19618E-05 | 1920.036 | 0.001430389 | 0.016117167 | 0.001024896 | 1920.461 |
| 600 | 1.4429E-05 | 0.00017579 | 5.67155E-09 | 1920.004 | 0.000144292 | 0.001757088 | 5.66619E-07 | 1920.035 | 0.001441476 | 0.017490036 | 5.61323E-05 | 1920.355 |
| 700 | 1.4415E-05 | 0.000175798 | 5.01459E-10 | 1920.003 | 0.000144259 | 0.001757876 | 5.01389E-08 | 1920.035 | 0.001442478 | 0.017568012 | 5.00693E-06 | 1920.349 |
| 800 | 1.43541E-05 | 0.000175799 | 7.04239E-11 | 1920.003 | 0.000144068 | 0.001757948 | 7.04193E-09 | 1920.034 | 0.001442053 | 0.017575246 | 7.03736E-07 | 1920.346 |
| 900 | 1.41568E-05 | 0.000175799 | 1.39539E-11 | 1920.002 | 0.000143439 | 0.001757959 | 1.39531E-09 | 1920.031 | 0.001440102 | 0.017576299 | 1.39455E-07 | 1920.338 |
| 1000 | 1.36437E-05 | 0.000175799 | 3.59586E-12 | 1920 | 0.000141775 | 0.00175796 | 3.59567E-10 | 1920.025 | 0.001434808 | 0.017576504 | 3.5938E-08 | 1920.317 |
| 1100 | 1.2544E-05 | 0.000175799 | 1.13756E-12 | 1919.996 | 0.000138052 | 0.001757961 | 1.1375E-10 | 1920.011 | 0.001422787 | 0.017576536 | 1.13692E-08 | 1920.27 |
| 1200 | 1.05982E-05 | 0.000175799 | 4.23593E-13 | 1919.898 | 0.000130844 | 0.001757959 | 4.23571E-11 | 1919.983 | 0.001398843 | 0.017576505 | 4.23353E-09 | 1920.178 |
| 1300 | 7.83261E-06 | 0.000175799 | 1.79933E-13 | 1919.978 | 0.000118631 | 0.001757957 | 1.79923E-11 | 1919.936 | 0.001356034 | 0.017576427 | 1.7983E-09 | 1920.016 |

Table 4: Theoretical reaction products of nitrogen gas with oxygen impurity and $C_2H_4$

| T(C) | 1 ppm $C_2H_4$ | | | | 10 ppm $C_2H_4$ | | | | 100 ppm $C_2H_4$ | | | |
| | Wt%-H2(g) | Wt%-CO(g) | Wt%-CO2(g) | g-C(s) | Wt%-H2(g)4 | Wt%-CO(g)5 | Wt%-CO2(g)6 | g-C(s)7 | Wt%-H2(g)11 | Wt%-CO(g)12 | Wt%-CO2(g)13 | g-C(s)14 |
|---|---|---|---|---|---|---|---|---|---|---|---|---|
| 200 | 1.10737E-05 | 9.91177E-07 | 0.000103791 | 1920.019 | 7.50859E-05 | 2.68663E-06 | 0.000762548 | 1920.202 | 0.000373454 | 7.24173E-06 | 0.00553997 | 1922.0243 |
| 300 | 1.39548E-05 | 4.51821E-05 | 9.75563E-05 | 1920.013 | 0.000128864 | 0.000152029 | 0.001104509 | 1920.161 | 0.001034469 | 0.000450888 | 0.009714254 | 1921.8276 |
| 400 | 1.44038E-0-5 | 0.000167744 | 6.03731E-06 | 1920.004 | 0.000142205 | 0.001281534 | 0.000352371 | 1920.07 | 0.0134406 | 0.006113494 | 0.008017928 | 1921.237 |
| 500 | 1.443E-05 | 0.000175627 | 1.21721E-07 | 1920.004 | 0.000144176 | 0.001741049 | 1.19618E-05 | 1920.036 | 0.001430389 | 0.016117167 | 0.001024896 | 1920.461 |
| 600 | 1.4429E-05 | 0.00017579 | 5.67155E-09 | 1920.004 | 0.000144292 | 0.001757088 | 5.66619E-07 | 1920.035 | 0.001441476 | 0.017490036 | 5.61323E-05 | 19203552 |
| 700 | 1.4415E-05 | 0.000175798 | 5.01459E-10 | 1920.003 | 0.000144259 | 0.001757876 | 5.01389E-08 | 1920.035 | 0.001442478 | 0.017568012 | 5.00693E-06 | 1920.3485 |
| 800 | 1.43541 E-05 | 0.000175799 | 7.04239E-11 | 1920.003 | 0.000144068 | 0.001757948 | 7.04193E-09 | 1920.034 | 0.001442053 | 0.017575246 | 7.03736E-07 | 1920.3455 |
| 900 | 1.41568E-05 | 0.000175799 | 1.39539E-11 | 1920.002 | 0.000143439 | 0.001757959 | 1.39531E-09 | 1920.031 | 0.001440102 | 0.017576299 | 1.39455E-07 | 1920.3376 |
| 1000 | 1.36437E-05 | 0.000175799 | 3.59586E-12 | 1920 | 0.000141775 | 0.00175796 | 3.59567E-10 | 1920.025 | 0.001434808 | 0.017576504 | 3.5938E-08 | 1920.3169 |
| 1100 | 1.2544E-05 | 0.000175799 | 1.13756E-12 | 1919.996 | 0.000138052 | 0.001757961 | 1.1375E-10 | 1920.011 | 0.001422787 | 0.017576536 | 1.13692E-08 | 1920.2703 |
| 1200 | 1.05982E-05 | 0.000175799 | 4.23593E-13 | 1919.989 | 0.000130844 | 0.001757959 | 4.23571 E-11 | 1919.983 | 0.001398843 | 0.017576505 | 4.23353 E-09 | 1920.1783 |
| 1300 | 7.83261 E-06 | 0.000175799 | 1.79933E-13 | 1919.978 | 0.000118631 | 0.001757957 | 1.79923 E-11 | 1919.936 | 0.001356034 | 0.017576427 | 1.7983E-09 | 1920.0158 |

The product of the reaction between graphite, nitrogen, oxygen and HC gases with various oxygen impurity, 1ppm, 10ppm and 100ppm at different temperatures are shown in Tables 2, 3 and 4. With any of the HC additive gases, the $CO_2$ concentration decreases significantly with temperature and remains stable after 500-560°C and has a straight line characteristic up to a temperature of about 1300°C.

The hydrogen concentration at first increases to a max level around 300-400°C and then remains constant, whereas at 800-900°C, the concentration decreases noticeably to reach equilibrium level at 1300°C.

In addition, the weight of the CFC at lower temperature increases due to carbon soot formation in lower temperature, whereas the mass change at 1300°C in equilibrium condition is negligible.

Thus, HC additive gas, in the graphite based thermal storage system as outlined above, can protect the CFC heating elements and other graphite parts from oxidation. However, as mentioned earlier, the HC gas properties such as density are important to have homogenous gas mix at different temperatures.

In considering the final gas concentration and gas properties, ethylene is the preferred choice.

To confirm that this the HC additive gas works for graphite protection in a graphite based thermal storage unit, an experiment was performed with graphite in a nitrogen atmosphere without the additive HC additive gas and with the additive gas.

**Test method to measure the oxidation characteristics of Graphite (without hydrocarbon addition)**

The oxidation of graphite is temperature dependent according to the Arrhenius equation.

The oxidation characteristics of carbon and graphite can be expressed in different ways:

- The percent weight loss in 24 hours at a given temperature,
- The oxidation threshold temperature at which a sample loses approximately 1% of its weight in a 24-hour period.

The first technique (percent weight loss) was used to evaluate the oxidation behaviour of the graphite in the presence of oxygen. A graphite piece of known weight and grade (50-60gr), was placed in a horizontal sealed tube furnace and exposed to nitrogen gas at 1300°C for a 24 hour period. Then, after the heating cycle and cooling to room temperature, the graphite sample was reweighed to obtain the oxidation weight loss.

$$\% \, Wt_L = \frac{Wt_i - Wt_f}{Wt_i} \times 100$$

Where: $Wt_i$ = Initial sample weight
$Wt_f$ = Final weight
$Wt_L$ = Percent weight loss (or gained)

This test was completed for regular graphite and carbon fiber/carbon matrix (CFC) composites as well. The test can be done for lower temperatures to plot oxidation rate vs temperature.

CO, $CO_2$ and $O_2$ concentrations were measured in the effluent gas stream during the test using a gas analyzer. The result of the oxidation test of the 50-60gr graphite is shown in the following Table 5:

Table 5

| $Wt_i$, gr | $Wt_f$, gr | $Wt_{loss}$ % | Tem, C | Gas | Gas Impurities |
|---|---|---|---|---|---|
| 1.3832 | 1.3604 | 1.65 | 1300 | 100% $N_2$, (grade 4.8) | $H_2O$ 5 ppm, $O_2$ less than 10 ppm, THC less than 0.5 ppm |
| (THC: Total Hydrocarbon Concentration) Holding time @ 1300 C: 24hrs | | | | | |

Confirmation that the additive gas works for graphite protection in the thermal storage system included a second experiment that was performed under the same experimental conditions as Table 5. The results of the second experiment are shown in Table 6:

Table 6: Graphite oxidation test in nitrogen gas with 100 ppm oxygen impurity with $CH_4$ additive

| $Wt_i$, gr | $Wt_f$, gr | $Wt_{gain}$, % | Tem, C | Gas | Gas impurities |
|---|---|---|---|---|---|
| 1.9845 | 2.0138 | 1-2 | 1300 | 99% $N_2$, (grade 4.8) 1% $CH_4$ (grade 1.3) | $H_2O$ 5 ppm, $O_2$ 100 ppm, THC less than 0.5 ppm |
| Holding time @ 1300 C: 24hrs | | | | | |

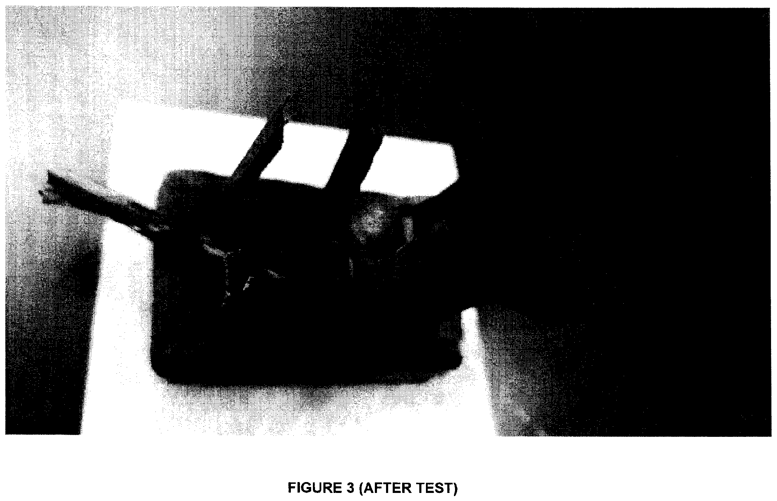

As indicated in Table 6 and confirmed by the condition of the graphite pieces shown in Figure 3, in the second test, the graphite pieces gained weight instead of suffering a weight loss. The addition of small amounts of methane gas provided protection of the graphite parts in the presence of low levels of oxygen. In this test, the oxygen concentration in nitrogen was 100 PPM and the methane concentration was 1% or 10,000 PPM.

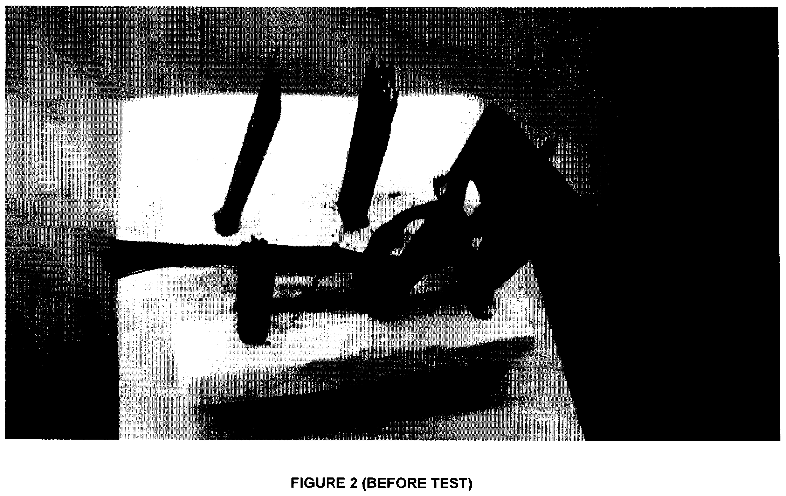

The photograph shown in Figure 2 is of the graphite pieces before exposure.

Figure 3 is a photograph after exposure to the atmosphere containing low levels of oxygen and including 1% methane. The graphite parts shape did not change after heating for 24hrs at 1300°C in nitrogen gas with 100ppm oxygen and methane additive

It is expected that the amount of methane gas injected into the system can be controlled in response to the measured oxygen concentration inside the system to obtain optimum protection without weight loss or gain by the graphite components. This will provide effective protection of the CFC heater elements from oxygen leakage into the system for long periods of service life.

From the above, it can be appreciated that the nitrogen atmosphere will be substantially pure, however, there may be low concentrations of oxygen present. The addition of a small amount of methane or other hydrocarbon gas (or mixtures thereof) provides protection for the carbon based heating elements as well as the graphite based thermal storage body. Various arrangements can be provided for either sensing of the amount oxygen and/or merely having low concentration of the hydrocarbon gas provided in the atmosphere. Sensing and automatic systems for adding hydrocarbon gas can be used while maintaining the levels many times below a combustion level. In particular, the concentration of the hydrocarbon gas is less than the lower flammable limit (LFL) of the hydrocarbon gas.

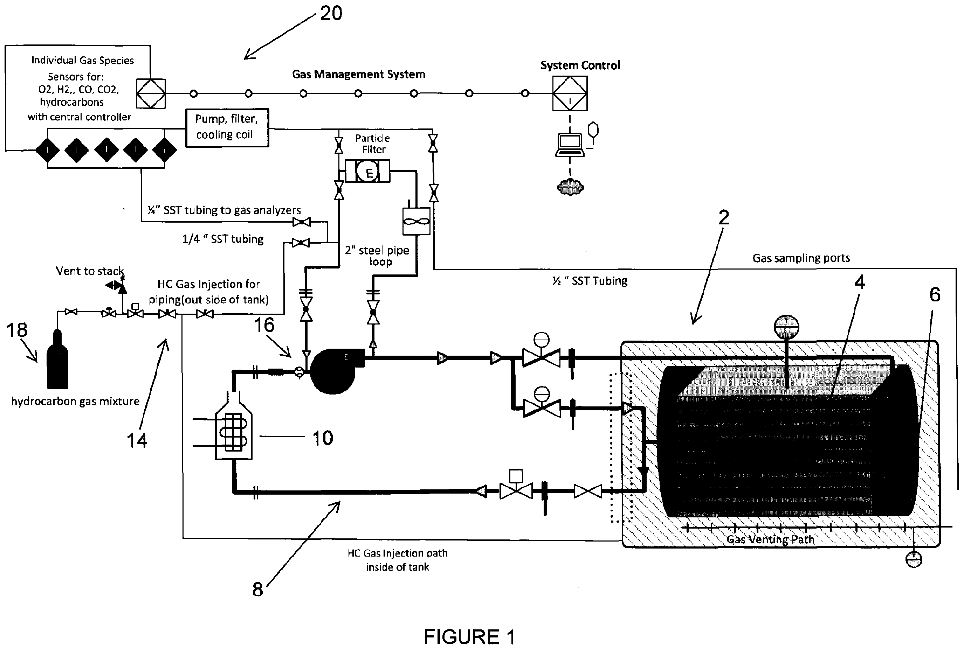

A thermal storage system with an inert nitrogen atmosphere is schematically shown in Figure 1.

Thermal energy can be stored in a graphite thermal body generally shown as 4 in Figure 1. The graphite thermal body contained within a sealed container and an inert gas atmosphere is circulated through the graphite thermal body. To assist in the extraction of heat from the graphite body, a series of channels are provided through the graphite body. Figure 1 shows an outer body 2 that insulates a sealed container 6 that houses the thermal body 4. A system for circulating of the inert gas atmosphere through the thermal body is generally indicated 8. Heat can be removed from the system using a heat exchanger generally shown as 10. Energy is provided to the thermal body 4 typically through electrical heating elements that are embedded in the graphite body. These electrical heating elements are preferably of a graphite or carbon material and allow the thermal storage system to operate at temperatures in excess of 1500°C. The heating elements themselves do not limit the maximum temperature of the storage system.

The preferred inert gas atmosphere that is circulated through the thermal body 4 is nitrogen based as it is cost effective and commercially available. It is most difficult to obtain entirely inert nitrogen atmosphere as there is often some impurities and these impurities can contain free oxygen and/or products that can produce free oxygen. Free oxygen will cause problems with respect to loss of carbon in the graphite core and, more particularly, can cause loss of graphite in the electrical heating elements. Unfortunately, this can significantly shorten the life of the electrical heating elements.

To effectively bind the free oxygen such that it is not a problem with respect to carbon loss of the heating elements, a small amount of hydrocarbon gas is introduced as indicated at 14 and this introduced gas is provided directly to the outer portion of the tank as well as directly to the circulating gas at position 16. The supply of hydrocarbon gas is shown as 18. A sensing arrangement and control arrangement is generally shown as 20. The sensing arrangement analyzes the circulating inert gas atmosphere and appropriately adds small amount of hydrocarbon gas as required.

With a system as generally shown in Figure 1, it is possible to monitor the circulating inert gas atmosphere and treat the inert gas atmosphere with an appropriate amount of the hydrocarbon gas to essentially eliminate problems of carbon erosion in both the graphite thermal body and the graphite or carbon based electrical heating elements. For some applications, monitoring of the inert atmosphere is not required or can merely be checked from time to time.

The low volume addition of hydrocarbon gas provides a practical inert gas atmosphere to maintain the expected life cycle of both the graphite heating elements and the graphite storage body. The term "hydrocarbon gas" includes mixtures of hydrocarbon gas.

Although various preferred embodiments of the present invention have been described herein in detail, it will be appreciated by those skilled in the art that variations may be made thereto without departing from the scope of the appended claims.

**Claims**

1.  A thermal storage system having a graphite thermal body contained within a generally inert nitrogen based atmosphere, and
    wherein said nitrogen based atmosphere includes the addition of hydrocarbon gas at a low concentration sufficient to bind any oxygen present in said inert nitrogen based atmosphere.

2.  A thermal storage system as claimed in claim 1 including carbon fiber carbon composite based electrical heating elements in said graphite thermal body for heating thereof.

3.  A thermal storage system as claimed in claim 1 or 2 wherein the hydrocarbon gas has a concentration of less than the lower flammable limit (LFL) of the hydrocarbon gas.

4.  A thermal storage system as claimed in claim 1, 2 or 3 wherein the hydrocarbon gas is methane, propane, ethylene, acetylene or mixtures thereof.

5.  A thermal storage system as claimed in claim 1, 2 or 3 wherein the hydrocarbon gas is ethylene or an ethylene based hydrocarbon gas.

6.  A thermal storage system as claimed in claim 1, 2 or 3 wherein the graphite thermal body includes graphite based electrical heating elements.

7.  A thermal storage system as claimed in claim 6 wherein said graphite based electrical heating elements are capable of operating at temperatures in excess of 1500°C.

**Patentansprüche**

1.  Ein thermisches Speichersystem mit einem thermischen Graphitkörper, der innerhalb einer im Allgemeinen inerten Stickstoffatmosphäre enthalten ist, und
    wobei die Stickstoffatmosphäre die Zugabe von Kohlenwasserstoffgas in einer niedrigen Konzentration umfasst, die ausreicht, um jeglichen Sauerstoff, der in der inerten Stickstoffatmosphäre vorhanden ist, zu binden.

2.  Thermisches Speichersystem gemäß Anspruch 1, das auf Kohlefaser und Kohlefaserverbundwerkstoff basierende elektrische Heizelemente in dem thermischen Graphitkörper zum Erhitzen davon umfasst.

3.  Thermisches Speichersystem gemäß Anspruch 1 oder 2, wobei das Kohlenwasserstoffgas eine Konzentraton unterhalb der unteren Entflammbarkeitsgrenze (UEG) des Kohlenwasserstoffgases aufweist.

4.  Thermisches Speichersystem gemäß Anspruch 1, 2 oder 3, wobei das Kohlenwasserstoffgas Methan, Propan, Ethylen, Acetylen oder Mischungen davon ist.

5.  Thermisches Speichersystem gemäß Anspruch 1, 2 oder 3, wobei das Kohlenwasserstoffgas Ethylen oder ein auf Ethylen basierendes Kohlenwasserstoffgas ist.

6.  Thermisches Speichersystem gemäß Anspruch 1, 2 oder 3, wobei der thermische Graphitkörper auf Graphit basierende elektrische Heizelemente umfasst.

7.  Thermisches Speichersystem gemäß Anspruch 6, wobei die auf Graphit basierenden elektrischen Heizelemente bei Temperaturen über 1500 °C betrieben werden können.

**Revendications**

1.  Un système de stockage thermique ayant un corps thermique en graphite contenu au sein d'une atmosphère à base d'azote généralement inerte, et
dans lequel ladite atmosphère à base d'azote inclut l'ajout de gaz hydrocarboné à une concentration faible suffisante pour lier tout oxygène présent dans ladite atmosphère à base d'azote inerte.

2. Un système de stockage thermique tel que revendiqué dans la revendication 1 incluant des éléments de chauffage électriques à base de composite carbone-fibre de carbone dans ledit corps thermique en graphite pour le chauffage de celui-ci.

3. Un système de stockage thermique tel que revendiqué dans la revendication 1 ou la revendication 2 dans lequel le gaz hydrocarboné a une concentration plus basse que la limite inférieure d'inflammabilité (LII) du gaz hydrocarboné.

4. Un système de stockage thermique tel que revendiqué dans la revendication 1, la revendication 2 ou la revendication 3 dans lequel le gaz hydrocarboné est du méthane, du propane, de l'éthylène, de l'acétylène ou des mélanges de ceux-ci.

5. Un système de stockage thermique tel que revendiqué dans la revendication 1, la revendication 2 ou la revendication 3 dans lequel le gaz hydrocarboné est de l'éthylène ou un gaz hydrocarboné à base d'éthylène.

6. Un système de stockage thermique tel que revendiqué dans la revendication 1, la revendication 2 ou la revendication 3 dans lequel le corps thermique en graphite inclut des éléments de chauffage électriques à base de graphite.

7. Un système de stockage thermique tel que revendiqué dans la revendication 6 dans lequel lesdits éléments de chauffage électriques à base de graphite sont capables de fonctionner à des températures dépassant 1500 °C.

FIGURE 1

FIGURE 2 (BEFORE TEST)

FIGURE 3 (AFTER TEST)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CA 2017000161 W
- WO 2005088218 A
- CA 2780437
- US 20150219404 A